# EUROPEAN PATENT APPLICATION

(11) **EP 3 780 750 A1**
(43) Date of publication of application: **17.02.2021**
(21) Application number: 18912285.6
(22) Date of filing: 28.11.2018
(51) Int. Cl.: H04W 48/16, H04W 36/08, H04W 36/36

(54) **TERMINAL APPARATUS FOR AUTONOMOUS HANDOVER BY TERMINAL APPARATUS, BASE STATION APPARATUS, CONTROL METHOD, AND PROGRAM**

(30) Priority: 26.03.2018 JP 2018058210
(71) Applicant: KDDI Corporation, Tokyo 163-8003 (JP)
(72) Inventor: PENG, Hailan, Fujimino-shi, Saitama 356-8502 (JP); OHSEKI, Takeo, Fujimino-shi, Saitama 356-8502 (JP); SUEGARA, Yasuhiro, Fujimino-shi, Saitama 356-8502 (JP)
(74) Representative: Pitchford, James Edward
(86) International application number: PCT/JP2018/043716
(87) International publication number: WO 2019/187338

(57) **Abstract**

The present invention provides a terminal apparatus, characterized by comprising: receiving means for receiving information of candidate base station apparatuses selected, on the basis of a service requested by the terminal apparatus, from among other base station apparatuses which are candidates for switching connection from a serving base station apparatus currently connected to the terminal apparatus from the serving base station apparatus; acquiring means for acquiring identification information of surrounding base station apparatuses from wireless signals transmitted by the surrounding base station apparatuses; and executing means for executing, independent of instruction from the serving base station apparatus, handover to a candidate base station apparatus corresponding to the identification information on the basis of the information of the candidate base station apparatuses, in a case in which the identification information corresponds to identification information of one of the candidate base station apparatuses, the handover being executed in response to quality of a wireless signal from the serving base station dropping below a predetermined level after the information of the candidate base station apparatuses has been received.

## Description

### TECHNICAL FIELD

The present invention relates to a terminal apparatus, a base station apparatus, a control method, and a program and specifically relates to terminal apparatus-initiated handover technology.

### BACKGROUND ART

In the next generation of cellular communication systems, covering a small area (cell) via beamforming is predicted to allow frequency resources to be more effectively utilized. With the size of such cells decreasing further, when a terminal apparatus is moving, the frequency of handovers is likely to increase. Thus, it is important to decrease the amount of time service is interrupted each handover. NPTL1 describes a method in which a serving base station (serving cell) notifies in advance of information for accessing a target cell candidate, events specific to the autonomous handover, and the like for a terminal apparatus to execute autonomous handover.

### CITATION LIST

### NON-PATENT LITERATURE

NPTL1: 3GPP contributed article, R2-1708840, August 2017

### SUMMARY OF INVENTION

### TECHNICAL PROBLEM

In 5th generation cellular communication systems, for example, network slicing is used to create networks for each application such as voice calls, streaming services for movies and music, high-speed large-capacity communication, connections from multiple terminals, ultra-reliable low latency communication, and the like. For example, by connecting to a network slice corresponding to a requested service, a terminal apparatus can be provided with the appropriate service. However, the technology described in NPTL1 does not take into consideration such network slicing, and thus a terminal apparatus may connect to an inappropriate network slice. In this case, the terminal apparatus cannot receive appropriate server at the handover destination, resulting in another handover being required.

### SOLUTION TO PROBLEM

According to the present invention, the terminal apparatus is capable of selecting an appropriate handover destination.

An aspect of the present invention is a terminal apparatus, characterized by comprising: receiving means for receiving information of candidate base station apparatuses selected, on the basis of a service requested by the terminal apparatus, from among other base station apparatuses which are candidates for switching connection from a serving base station apparatus currently connected to the terminal apparatus from the serving base station apparatus; acquiring means for acquiring identification information of surrounding base station apparatuses from wireless signals transmitted by the surrounding base station apparatuses; and executing means for executing, independent of instructions from the serving base station apparatus, handover to a candidate base station apparatus corresponding to the identification information on the basis of the information of the candidate base station apparatuses, in a case in which the identification information corresponds to identification information of one of the candidate base station apparatuses, the handover being executed in response to quality of a wireless signal from the serving base station dropping below a predetermined level after the information of the candidate base station apparatuses has been received.

Another aspect of the present invention is a base station apparatus capable of connecting to a terminal apparatus, characterized by comprising: acquiring means for acquiring information of a service requested by the terminal apparatus; selecting means for selecting a candidate base station apparatus from among other base station apparatuses which are candidates for switching connection from the base station apparatus of the terminal apparatus on the basis of the information of the service requested by the terminal apparatus; and transmitting means for transmitting information of the candidate base station apparatus selected to the terminal apparatus, wherein the terminal apparatus executes handover, independent of instructions from the base station apparatus, after the information of the candidate base station apparatus has been received.

### ADVANTAGEOUS EFFECTS OF INVENTION

According to the present invention, the terminal apparatus is capable of selecting an appropriate handover destination.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain the principles of the invention.
FIG. 1 is a diagram illustrating an example configuration of a wireless communication system.
FIG. 2 is a diagram illustrating an example hardware configuration of an apparatus.
FIG. 3 is a diagram illustrating an example functional configuration of a base station apparatus.
FIG. 4 is a diagram illustrating an example functional configuration of a terminal apparatus.
FIG. 5 is a diagram illustrating a first example of the flow of the process executed by the wireless communication system.
FIG. 6 is a diagram illustrating a second example of the flow of the process executed by the wireless communication system.

### DESCRIPTION OF EMBODIMENTS

Embodiments of the present invention will be described below with reference to the drawings.

### Configuration of Wireless Communication System

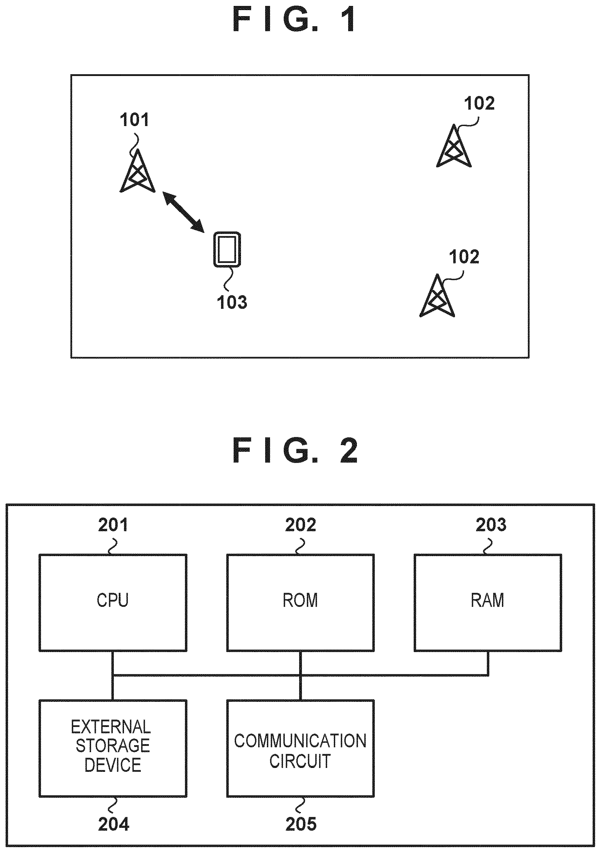

FIG. 1 illustrates an example configuration of a wireless communication system according to the present embodiment. The wireless communication system includes a first base station apparatus 101, a second base station apparatus 102, and a terminal apparatus 103. The first base station apparatus 101 is a serving base station connected with the terminal apparatus 103. The second base station apparatus 102 is a non-serving base station not connected to the terminal apparatus 103. Note that the first base station apparatus 101, for example, may be configured to provide a plurality of cells (beams) via beamforming. In this case, a connected first cell (serving cell) from among the plurality of cells acts as the serving base station, and a non-connected second cell (non-serving cell) acts as the non-serving base station. Hereinafter, in the case in which a single base station apparatus provides both a serving cell and a non-serving cell, a section of the base station apparatus that provides the non-serving cell is treated as the second base station apparatus 102 and a section of the base station apparatus that provides the serving cell is treated as the first base station apparatus 101. Also, in the case in which the terminal apparatus 103 has switched serving cells (executed handover), the base station apparatus providing the serving cell after the switch functions as the first base station apparatus 101 and the pre-handover base station apparatus functions as the second base station apparatus 102. In other words, the first base station apparatus 101 and the second base station apparatus 102 are only different in that they are either connected to the terminal apparatus 103 or not. Note that FIG. 1 illustrates an example, and typically, multiple base station apparatuses and multiple terminal apparatuses are present. Unless specifically mentioned, the process described below is performed between each base station apparatus and each terminal apparatus.

In the present embodiment, the terminal apparatus 103 acquires in advance from the currently connected serving base station (the first base station apparatus 101) information of candidates, i.e., other base station apparatuses (for example, the second base station apparatus 102), to switch connection to from the currently connected serving base station. This information corresponds to information of handover destination candidate base station apparatuses. The information of the candidate base station apparatuses, in one example, includes identification information of a cell provided by the candidate base station apparatus and information used in the process of connecting to the candidate base station apparatus. Here, the identification information, for example, may be NR Cell Global ID (NCGI) for the candidate base station apparatus. Note that an NCGI is a global ID for a cell determined by combining together a Public Land Mobile Network ID (PLMN ID) and a NR Cell Identity (NCI). Also, the connection process, for example, may be a random access procedure, and the information used in the connection process, in an example, may include information of a beam formed by the candidate base station apparatus, routing information (Tracking Area ID (TAI)), frequency information, and the like.

The terminal apparatus 103, having information of the candidate base station apparatuses in this manner, communicates with the serving base station and maintains communications with the serving base station while the communication environment with the serving base station is good. Then, in the case in which the wireless signal quality from the serving base station drops below a predetermined level, the terminal apparatus 103 acquires identification information of surrounding base station apparatuses from the wireless signals transmitted from the surrounding base station apparatuses and compares them to the stored identification information of the candidate base station apparatuses. Here, the identification information of the surrounding base station apparatuses, for example, may be Physical Cell ID (PCI). In the case in which, for example, from among the identification information of the surrounding base station apparatuses, identification information acquired from a wireless signal received at a wireless quality equal to or greater than a predetermined level corresponds to the identification information (NCGI) of a candidate base station apparatus, the terminal apparatus 103 sets the candidate base station apparatus corresponding to the identification information as the connection switch target. Note that in the case in which the identification information of more than one of the surrounding base station apparatuses corresponds to the identification information of the candidate base station apparatuses, the terminal apparatus 103 may select one candidate base station apparatus to switch to by selecting the base station apparatus with the best wireless quality or one base station apparatus at random from the base station apparatuses with wireless quality greater than a threshold level, for example. Then, the terminal apparatus 103 executes handover to the connection switch candidate base station apparatus without going through the serving base station. For example, the terminal apparatus 103 establishes connection with the connection switch candidate base station apparatus by executing a random access procedure. Here, the terminal apparatus 103 may transmit context information (UE context) of the terminal apparatus 103 to the connection switch candidate base station apparatus. Thereafter, the connection switch candidate base station apparatus notifies the pre-switch base station apparatus (the previous serving base station) that the terminal apparatus 103 has executed autonomous handover and requests for the transfer of data addressed to the terminal apparatus 103. When the pre-switch base station apparatus receives the notification of the handover by the terminal apparatus 103 and the request for data transfer, the pre-switch base station apparatus transfers the data addressed to the terminal apparatus 103 to the connection switch candidate base station apparatus. Then, the transferred data addressed to the terminal apparatus 103 is transmitted from the connection switch candidate base station apparatus to the terminal apparatus 103. In this way, the terminal apparatus 103 can execute autonomous handover without going through the serving base station. Thus, the terminal apparatus 103 can quickly switch connection to a base station apparatus in response to the quality of the wireless signal from the serving base station dropping below a predetermined level. As a result, the length of time that communication service to the terminal apparatus 103 is down can be shortened. Note that the terminal apparatus 103 may initiate autonomous handover in response to an event other than the quality of the wireless signal from the serving base station dropping below a predetermined level. For example, autonomous handover may be triggered by the amount of delay in communication with the serving base station increasing beyond a predetermined value, the amount of resources allocated from the serving base station being insufficient, and the like.

In the 5th generation cellular communication system (New Radio (NR), network slicing that defines networks per service is used. Also, the supported network slices may be different for each base station apparatus. In other words, a portion of the base station apparatuses may support all of the network slices and provide all services, but another portion of the base station apparatuses may only support a portion of the network slices and this portion may not be able to provide service. In this case, when the serving base station notifies the terminal apparatus 103 of information of candidate base station apparatuses, which is information of other base station apparatuses in an adjacent relationship, irrespective of the service requested by the terminal apparatus 103, autonomous handover by the terminal apparatus 103 may result in the connection switch candidate base station apparatus not being able to provide the service requested by the terminal apparatus 103.

In contrast, in the present embodiment, the serving base station selects, on the basis of information of the service requested by the terminal apparatus 103, a candidate base station apparatus from among other base station apparatuses which are candidate targets (for example, have an adjacent relationship with the serving base station) for switching connection from the serving base station. Here, the information of the service requested by the terminal apparatus 103 is, for example, Network Slice Selection Assistance Information (NSSAI). NSSAI includes at least one Single-NSSAI (S-NSSAI), and each network slice is uniquely identified by an S-NSSAI. Note that a specific network slice supports only a specific Access and Mobility management Function (AMF). Each base station apparatus, may manage the information of other base station apparatuses which are a candidate targets (for example, has an adjacent relationship with itself) for switching connection from itself, this information including, for example, NCGI, beam information, routing information, and frequency information, as well as AMF ID (or information of a plurality of S-NSSAIs) of the other base station apparatuses. Each base station apparatus acquires NSSAI, which is information of the service requested by the terminal apparatus 103 and selects, from among other base station apparatuses which are candidates for switching connection from itself, another base station apparatus that includes information of an AMF ID or S-NSSAI information corresponding to the acquired NSSAI as a connection switch candidate base station apparatus. Also, the base station apparatus transmits information of the selected candidate base station apparatus to the terminal apparatus 103 currently connected to itself. Here, the transmitted information of the candidate base station apparatus is the same as described above. The terminal apparatus 103, after these pieces of information are acquired, may execute autonomous handover as described above in response to a predetermined trigger. According to this configuration, the terminal apparatus 103 is provided with information of a base station apparatus capable of providing the service it requested in the form of information of a connection switch candidate base station apparatus. Thus, the communication service can be reliably continuously provided after the connection is switched.

Note that the serving base station may transmit information of candidate base station apparatuses based on the service requested by the terminal apparatus 103 via individual signaling to the terminal apparatus 103. Here, individual signaling, for example, may be performed via a Radio Resource Control (RRC) message or on-demand system information (on-demand SI). Also, information (NSSAI) of the requested service may be included in a registration request message for registering to a Radio Access Network (RAN) of the NR This allows the terminal apparatus 103 to register the requested service on the network side. In this case, the base station apparatus can acquire information of the service requested by the terminal apparatus 103 by searching for registered information on the network side. In other words, NSSAI may not be transmitted anew to the base station apparatus from the terminal apparatus 103. However, the terminal apparatus 103 may transmit information such as NSSAI of the requested service to the base station apparatus. For example, the terminal apparatus 103 may include information of the requested service in a signal (for example, a message requesting an adjacent cell list) and transmit, to the serving base station, the signal requesting information of a connection switch candidate. In this way, for the terminal apparatus 103 requesting information of a connection switch candidate, the serving base station can quickly notify the terminal apparatus 103 of information of candidate base station apparatuses without information of the service requested by the terminal apparatus 103 needing to be searched for.

Also, the serving base station may acquire information of the service requested by a plurality of terminal apparatuses 103 and, for example, group the terminal apparatuses 103 so that terminal apparatuses requesting the same service are in the same group. Furthermore, the serving base station may select a candidate base station apparatus from each group and transmit information of each of the selected candidate base station apparatuses via a single signal to one or more terminal apparatuses 103 in the corresponding group. Transmitting information via a single signal may be performed by the broadcast of system information, for example. Note that a multicast signal for a designated group or a broadcast signal for all terminal apparatuses may be transmitted. Also, note that in the case in which a broadcast signal is transmitted to all terminal apparatuses, information for designating a target group or target service may be included in the signal. Furthermore, the plurality of terminal apparatuses 103 may be grouped on the basis of criteria other than whether or not the terminal apparatuses 103 are requesting the same service. In other words, in the case in which a plurality of services are processed in the same network slice, the terminal apparatuses capable of being accommodated in the same network slice may be grouped together in one group. This allows the amount of wireless resources used to notify about the candidate base station apparatuses to be reduced.

Examples of the configuration of the apparatuses and the flow of the executed process will be described below.

### Hardware Configuration

FIG. 2 illustrates an example hardware configuration of the base station apparatus and the terminal apparatus. The base station apparatus and the terminal apparatus, for example, have the hardware configuration illustrated in FIG. 2 and include, for example, a CPU 201, a ROM 202, a RAM 203, an external storage device 204, and a communication circuit 205. In the base station apparatus and the terminal apparatus, for example, a program stored in any one of the ROM 202, the RAM 203, and the external storage device 204 for realizing the functions of the base station apparatus and the terminal apparatus described above is executed by the CPU 201.

Then, the base station apparatus and the terminal apparatus, for example, communicate with other apparatuses, with the communication circuit 205 being controlled by the CPU 201. Note that the communication circuit 205 of the base station apparatus, for example, may communicate with other base station apparatuses and other network nodes via a wired line. Also, the communication circuit 205 of the base station apparatus may be capable of wireless communication with the terminal apparatus via one or more (a plurality of) beams formed by the communication circuit 205. Furthermore, in this case, the communication circuit 205 of the terminal apparatus is capable of connecting to the base station apparatus and capable of wireless communication therewith via at least one of the beams formed by the communication circuit 205 of the base station apparatus. Note that in the configuration illustrated in FIG. 2, the base station apparatus and the terminal apparatus are schematically illustrated in a manner in which a single communication circuit 205 is provided. However, no such limitation is intended, and a plurality of communication circuits may be provided. For example, the base station apparatus may include a first communication circuit for wired communication with another base station apparatus and a second communication circuit for wireless communication with the terminal apparatus. Furthermore, the terminal apparatus, for example, may include the first communication circuit for NR and the second communication circuit for Long Term Evolution (LTE). Also, the terminal apparatus may include, for example, a wireless communication circuit relating to a wireless LAN standard or other non-cellular standard, or, for example, may include a wired communication circuit used for wired connection via a USB connection or the like.

Note that the base station apparatus and the terminal apparatus may be provided with dedicated hardware for executing the functions. Alternatively, a portion of the functions may be executed by the hardware and the other portion may be executed by a computer running a program. Also, all functions may be executed by a computer and a program.

### Functional Configuration

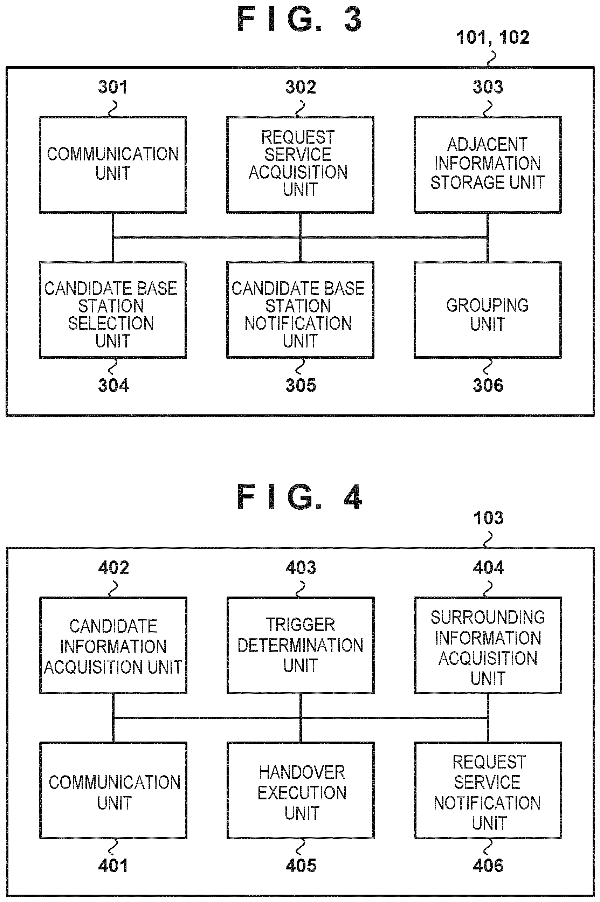

FIG. 3 illustrates an example of the functional configuration of the base station apparatus (the first base station apparatus 101 and the second base station apparatus 102). The base station apparatus, for example, includes a communication unit 301, a request service acquisition unit 302, an adjacent information storage unit 303, a candidate base station selection unit 304, and a candidate base station notification unit 305. Also, the base station apparatus, for example, may optionally include a grouping unit 306.

The communication unit 301 executes wired/wireless communication with another base station apparatus, wireless communication with the currently connected terminal apparatus 103, and the like.

The request service acquisition unit 302 acquires information of the service requested by the terminal apparatus 103. For example, the request service acquisition unit 302 may receive a message (registration request) requesting registration from an unregistered terminal apparatus 103 and acquire, as information of the service requested by the terminal apparatus 103, the NSSAI within the message. Also, for a registered terminal apparatus 103, the request service acquisition unit 302 may acquire information of the service requested by the terminal apparatus 103 managed at a predetermined node within the network from the predetermined node. Also, in some examples, in the case in which the terminal apparatus 103 has executed handover, the request service acquisition unit 302 may acquire information of the service requested by the terminal apparatus 103 from the pre-handover base station apparatus.

The adjacent information storage unit 303 stores information of another base station apparatus in an adjacent relationship with the base station apparatus. Here, the adjacent information storage unit 303 stores information relating to the base station apparatus (cell) which is a connection switch candidate as information of another base station apparatus in an adjacent relationship. In other words, the stored other base station apparatus may not have a directly adjacent relationship with the base station apparatus, and in the case in which connection is switched using a relay, information of a cell not geographically adjacent may be stored. The information of another base station apparatus, for example, may include NCGI, beam information, routing information, and AMF ID (or information of a plurality of S-NSSAIs). Note that, in the case in which the number of base station apparatuses with an adjacent relationship has increased or decreased, for example, the adjacent information storage unit 303 may include an Automatic Neighbor Relation (ANR) function for automatically configuring adjacent relationships.

The candidate base station selection unit 304 selects, as a connection switch candidate base station apparatus, another base station apparatus capable of providing the service requested from other base station apparatuses with an adjacent relationship on the basis of information of the service requested by the terminal apparatus 103 acquired by the request service acquisition unit 302 and information stored in the adjacent information storage unit 303. For example, the candidate base station selection unit 304 selects, as a connection switch candidate base station apparatus, from among other base station apparatuses which are candidates for switching connection from the base station apparatus, another base station apparatus that includes information of an AMF ID or S-NSSAI information corresponding to the NSSAI, which is information of the service requested by the terminal apparatus 103. Note that selection of the candidate base station apparatus may not be executed by the serving base station and, for example, may be executed by a network node other than the serving base station.

The candidate base station notification unit 305 notifies the terminal apparatus 103 of the candidate base station apparatus selected by the candidate base station selection unit 304. For example, the candidate base station notification unit 305 notifies of information of the candidate base station apparatuses for the service requested by the terminal apparatus 103 via individual signaling to the terminal apparatus 103 via an RRC message or on-demand system information. The information of the candidate base station apparatus in the notification, in one example, includes identification information of a cell provided by the candidate base station apparatus and information used in the process of connecting to the candidate base station apparatus.

The grouping unit 306 groups the plurality of terminal apparatuses 103 into groups for each service requested by the terminal apparatuses 103 or for each network slice needed to execute the services. For example, groups are formed from among the terminal apparatuses 103 currently connected to the base station apparatus, with the terminal apparatuses requesting the same service or the terminal apparatuses that need to connect to the same network slice being put in the same group. In the case in which the grouping unit 306 groups the terminal apparatuses, the candidate base station selection unit 304 selects a candidate base station apparatus for each group, and the candidate base station notification unit 305 transmits information of the candidate base station apparatus via a single multicast signal to terminal apparatuses in the group or a single broadcast signal to all terminal apparatuses.

FIG. 4 is a diagram illustrating an example functional configuration of the terminal apparatus 103. The terminal apparatus 103, for example, includes a communication unit 401, a candidate information acquisition unit 402, a trigger determination unit 403, a surrounding information acquisition unit 404, a handover execution unit 405, and a request service notification unit 406.

The communication unit 401 wirelessly communicates with the currently connected base station apparatus (the first base station apparatus 101). Also, the communication unit 401 may receive a wireless signal from a non-connected base station apparatus and acquire identification information (for example, PCI) of a cell included in the wireless signal and the like.

The candidate information acquisition unit 402 acquires information of a connection switch candidate base station apparatus selected according to information of the service requested by the terminal apparatus 103 from the currently connected base station apparatuses (or other network nodes). Here, the information of a candidate base station apparatus, for example, may include identification information (for example, NCGI) of a cell formed by the candidate base station apparatus and information (for example, beam information, routing information, frequency information, and the like) used in the connection process with the candidate base station apparatus.

The trigger determination unit 403, for example, determines a trigger for initiating the handover by the terminal apparatus 103. Examples of the trigger include, the quality of the wireless signal from the serving base station dropping below a predetermined level, the amount of delay increasing above a predetermined value as a result of the load of the serving base station increasing above a predetermined value, the amount of resources allocated from the serving base station is equal to or less than a predetermined amount, and the like. Note that the trigger determination unit 403 may determine a discretionary trigger for initiating autonomous handover by the terminal apparatus 103.

The surrounding information acquisition unit 404, when the trigger for initiating handover is detected by the determination unit 403, may observe wireless signals from non-connected base station apparatuses in the surroundings and acquire the identification information (PCI) of the base station apparatuses, for example. Note that the surrounding information acquisition unit 404 may also measure the wireless quality of the reception power or the like of the wireless signals from the surrounding base station apparatuses. Also, the surrounding information acquisition unit 404 determines whether or not an item corresponding to the identification information of information of the candidate base station apparatus acquired by the candidate information acquisition unit 402 is present in the identification information of the surrounding base station apparatuses. The surrounding information acquisition unit 404 sets the surrounding base station apparatus with identification information corresponding to the information of the candidate base station apparatus as the handover target. Note that in the case in which the identification information of more than one surrounding base station apparatuses corresponds to the information of the candidate base station apparatuses, the surrounding information acquisition unit 404 may set, from among the plurality of surround base station apparatuses, the base station apparatus with the best wireless quality or select one base station apparatus at random from base station apparatuses with wireless quality greater than a predetermined standard as the handover target. Also, the surrounding information acquisition unit 404, before the trigger for initiating handover is detected by the determination unit 403, may observe the wireless signals from non-connected base station apparatuses in the surroundings and acquire identification information of the base station apparatuses, measure the reception power, and the like. For example, the surrounding information acquisition unit 404 may periodically, for example, observe the wireless signals from the surrounding base station apparatuses and store the results. Then, in the case in which the trigger for initiating handover is detected by the trigger determination unit 403, the handover target is set on the basis of the stored information. Also, in the case in which the wireless signals from the surrounding base station apparatuses are observed in advance, the surrounding information acquisition unit 404 may only store the results relating to the base station apparatus corresponding to the identification information of the information of the candidate base station apparatus acquired by the candidate information acquisition unit 402. In this way, after a trigger for initiating handover is detected by the trigger determination unit 403, the surrounding information acquisition unit 404 does not need to perform the process of extracting information relating to the candidate base station apparatuses from the stored information. This allows the amount of time needed for processing from when the trigger for initiating handover is detected to be shortened.

The handover execution unit 405 executes handover to the base station apparatus set as the handover target by the surrounding information acquisition unit 404 without going through the serving base station. The handover execution unit 405, for example, executes a random access procedure with the target base station apparatus. Also, the handover execution unit 405, at this time, may transmit context information of the terminal apparatus 103 to the target base station apparatus.

The request service notification unit 406 notifies the network side of information of the service requested by the terminal apparatus 103. The request service notification unit 406, for example, notifies the network side of information of the service requested by the terminal apparatus 103 by the terminal apparatus 103 transmitting a registration request message for registering to an NR, with the message including NSSAI. Also, the request service notification unit 406, for example, may include information of the service requested by the terminal apparatus 103 in a request message and transmit the request message for requesting, to the serving base station, information of the candidate base station apparatuses. Note that the request service notification unit 406 may notify the network side via the serving base station of information of the service requested by the terminal apparatus 103 by signaling in a manner other than that described above.

### Process Flow

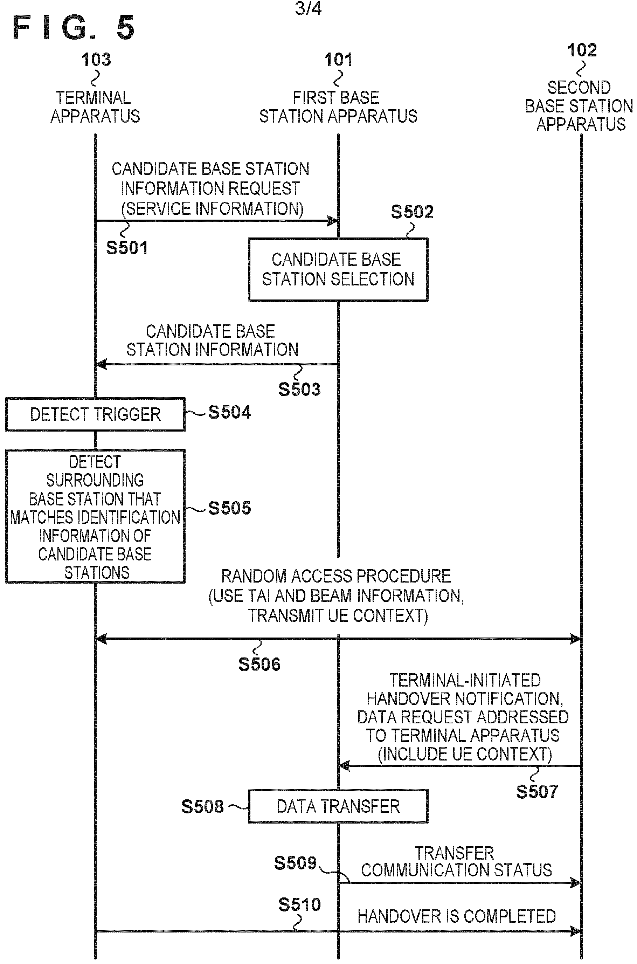

Next, an example of the flow of the process executed in the wireless communication network will be described. FIG. 5 illustrates an example of the flow of a first process.

In the process of FIG. 5, the first base station apparatus 101, which is the serving base station of the terminal apparatus 103, acquires information of the service requested by the terminal apparatus 103 (step S501). Note that FIG. 5 illustrates an example in which the first base station apparatus 101 is notified of information of the service requested by the terminal apparatus 103 via a message requesting information of candidate base station apparatuses for switching connection from the terminal apparatus 103. Note that, when registration to a network is required, the terminal apparatus 103 may notify the network side of information of the service requested by itself, and in this case, the first base station apparatus 101 may acquire this information from another node (for example, another base station apparatus) in the network. Then, the first base station apparatus 101 selects a candidate base station apparatus capable of providing the service from other base station apparatuses in an adjacent relationship on the basis of information of the service requested by the terminal apparatus 103 (step S502). For example, the first base station apparatus 101 acquires NSSAI as information of the service requested by the terminal apparatus 103 and selects, as the candidate base station apparatus, a base station apparatus configuring a network slice corresponding to the NSSAI. Note that in the case in which information of the service requested by the terminal apparatus 103 cannot be acquired, a base station apparatus corresponding to a default AMF is selected as the candidate base station apparatus. Also, to prevent a plurality of terminal apparatuses being handed over to the same candidate base station apparatus all at once, the first base station apparatus 101 may take into consideration the load of the candidate base station apparatuses and select different candidate base station apparatuses for the terminal apparatuses requesting the same service. The first base station apparatus 101 notifies the terminal apparatus 103 of information of the selected candidate base station apparatus (step S503). Here, the first base station apparatus 101 may notify the terminal apparatus 103 of information via individual signaling, such as via an RRC message or on-demand system information.

The terminal apparatus 103 receives information of the candidate base station apparatuses and stores the received information. Then, the terminal apparatus 103 continuously monitors for a trigger needed for handover while in communication with the first base station apparatus 101. Here, when the terminal apparatus 103 detects a trigger such as the quality of the wireless signal from the first base station apparatus 101 dropping below a predetermined level (step S504), the terminal apparatus 103 then observes the wireless signals from the surrounding base station apparatuses and acquires identification information of the base station apparatuses (the cell provided by each base station apparatus) from the wireless signals. Then, the terminal apparatus 103 compares the acquired identification information to the identification information of the candidate base station apparatuses and detects a surrounding base station apparatus with identification information corresponding to the identification information of any candidate base station apparatus (step S505). In the case in which a plurality of base station apparatuses are detected, the terminal apparatus 103, for example, sets the handover target base station apparatus on the basis of the quality of the wireless signals from the base station apparatuses. Then, the terminal apparatus 103 executes a random access procedure with the base station apparatus (the second base station apparatus 102) set as the handover target (step S506). Here, the terminal apparatus 103 may execute a random access procedure using routing information (TAI) and beam information of the second base station apparatus 102 set as the handover target, for example. Also, the terminal apparatus 103 at this time transmits to the second base station apparatus 102 the context information (UE context) of the terminal apparatus 103.

Thereafter, the second base station apparatus 102 transmits to the pre-handover first base station apparatus 101 a notification that the terminal apparatus 103 has executed autonomous handover and a request for the transfer of data addressed to the terminal apparatus 103 (step S507). Then, the first base station apparatus 101 transfers buffered data or packets addressed to the terminal apparatus 103 to the second base station apparatus 102 (step S508) and also transmits information of the communication status such as the sequence number (SN) status to the second base station apparatus 102 (step S509). According to this process, after handover is completed (step S510), the second base station apparatus 102 communicates with the terminal apparatus 103 as the serving base station. Then, the second base station apparatus 102, for example, executes the operations of the first base station apparatus 101 as illustrated in FIG. 5.

As described above, in the present embodiment, the terminal apparatus 103 is notified of a base station apparatus capable of providing the service requested by the terminal apparatus 103 as a handover destination candidate base station apparatus. Also, the terminal apparatus 103 can execute autonomous (independent of instructions from the serving base station) handover using the information of the candidate base station apparatuses. In this way, the amount of time service is interrupted can be reduced, and connecting to a base station apparatus that cannot provide the service requested by the terminal apparatus 103 can be prevented. As a result, the terminal apparatus 103 can more reliably receive continuous service.

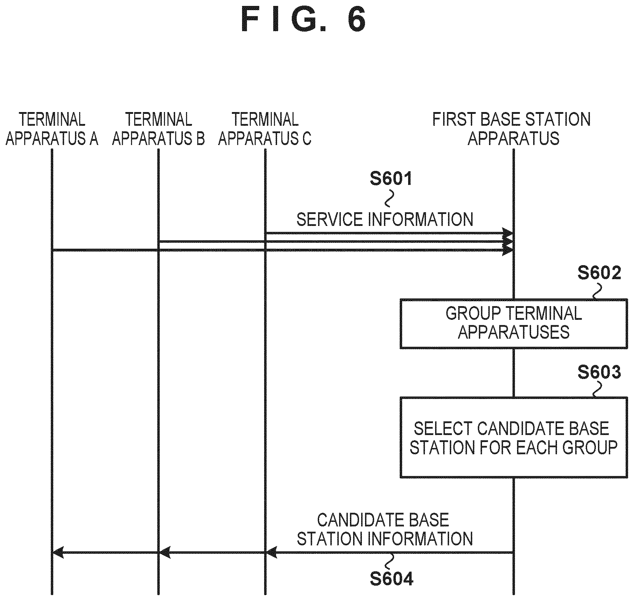

FIG. 6 illustrates an example of a second process. Note that FIG. 6 illustrates the flow until the serving base station notifies the terminal apparatus of information of the candidate base station apparatuses. The process after the notification of this information is the same as the process as step S504 in FIG. 5 and is thus omitted from the diagram.

In the process illustrated in FIG. 6, the first base station apparatus 101 acquires information of the service requested by all of the plurality of terminal apparatuses currently connected (step S601). Note that in the case in which the terminal apparatuses request registration to a network or the case in which the terminal apparatuses request information of the connection switch candidate base station apparatus, information may be acquired via notification from the terminal apparatus to the network side. The first base station apparatus groups the plurality of terminal apparatuses currently connected on the basis of the acquired information (step S602). For example, grouping is performed on the basis of criteria, such as that the terminal apparatuses requesting the same service are placed in the same group or that the terminal apparatuses that need to connect to the same network slice are placed in the same group. Then, the first base station apparatus 101 selects a candidate base station apparatus for each group (step S603). Next, the first base station apparatus 101 transmits, via a single signal, information of the selected candidate base station apparatus to one or more of the terminal apparatuses in the group (step S604). Note that the information may be transmitted via a single multicast signal addressed to one or more of the terminal apparatuses in the group or via a single broadcast signal that includes information for specifying the group.

In the case in which a plurality of terminal apparatuses request the same service or connect to the same network slice, these terminal apparatuses are notified of information of the same candidate base station apparatus, and when these terminal apparatuses are separately notified of the information, only a number of signals corresponding to the number of terminal apparatuses are transmitted. However, by performing grouping as illustrated in FIG. 6, the terminal apparatuses in the group are notified of information of the candidate base station apparatuses via a single signal. This can reduce the wireless resources needed for the notification of information of a candidate base station apparatuses.

The present invention is not limited to the above embodiments and various changes and modifications can be made within the spirit and scope of the present invention. Therefore, to apprise the public of the scope of the present invention, the following claims are made.

The present application claims priority from Japanese Patent Application No. 2018-058210 filed on March 26, 2018, which is hereby incorporated by reference herein.

## Claims

1. A terminal apparatus, **characterized by** comprising:
receiving means for receiving information of candidate base station apparatuses selected, on the basis of a service requested by the terminal apparatus, from among other base station apparatuses which are candidates for switching connection from a serving base station apparatus currently connected to the terminal apparatus from the serving base station apparatus;
acquiring means for acquiring identification information of surrounding base station apparatuses from wireless signals transmitted by the surrounding base station apparatuses; and
executing means for executing, independent of instruction from the serving base station apparatus, handover to a candidate base station apparatus corresponding to the identification information on the basis of the information of the candidate base station apparatuses, in a case in which the identification information corresponds to identification information of one of the candidate base station apparatuses, the handover being executed in response to quality of a wireless signal from the serving base station dropping below a predetermined level after the information of the candidate base station apparatuses has been received.

2. The terminal apparatus according to claim 1, **characterized in that** the receiving means receives the information of the candidate base station apparatuses via individual signaling.

3. The terminal apparatus according to claim 1 or 2, **characterized in that** the information of the candidate base station apparatuses includes identification information of a cell provided by the candidate base station apparatus and information used in a process of connecting to the candidate base station apparatus.

4. The terminal apparatus according to any one of claims 1 to 3, **characterized by** further comprising transmitting means for transmitting information corresponding to the service requested by the terminal apparatus.

5. The terminal apparatus according to claim 4, **characterized in that** the transmitting means transmits Network Slice Selection Assistance Information (NSSAI) as the information corresponding to the service requested by the terminal apparatus.

6. The terminal apparatus according to claim 4 or 5, **characterized in that** the transmitting means includes information corresponding to the service requested by the terminal apparatus in a signal and transmits the signal for requesting the information of the candidate base station apparatuses.

7. The terminal apparatus according to any one of claims 1 to 6, **characterized in that**
when the executing means executes the handover, the executing means transmits context information of the terminal apparatus to a base station apparatus the handover switched connection to.

8. Abase station apparatus capable of connecting to a terminal apparatus, **characterized by** comprising:
acquiring means for acquiring information of a service requested by the terminal apparatus;
selecting means for selecting a candidate base station apparatus from among other base station apparatuses which are candidates for switching connection from the base station apparatus of the terminal apparatus on the basis of the information of the service requested by the terminal apparatus; and
transmitting means for transmitting information of the candidate base station apparatus selected to the terminal apparatus, wherein
the terminal apparatus executes handover, independent of instruction from the base station apparatus, after the information of the candidate base station apparatus has been received.

9. The base station apparatus according to claim 8, **characterized in that** the acquiring means acquires information corresponding to the service requested by the terminal apparatus from the terminal apparatus.

10. The base station apparatus according to claim 9, **characterized in that** the acquiring means acquires Network Slice Selection Assistance Information (NSSAI) as the information corresponding to the service requested by the terminal apparatus.

11. The base station apparatus according to any one of claims 8 to 10, **characterized in that**
the transmitting means transmits the information of the candidate base station apparatus via individual signaling to the terminal apparatus.

12. The base station apparatus according to any one of claims 8 to 10, **characterized by** further comprising
grouping means for grouping a plurality of the terminal apparatuses on the basis of information of a service requested by each one of the plurality of terminal apparatuses; wherein
the selecting means selects the candidate base station apparatus for each group; and
the transmitting means transmits, via a single signal, information of the candidate base station apparatus of each group to one or more terminal apparatuses in the group.

13. A method for controlling a terminal apparatus, **characterized by** comprising:
a receiving step in which receiving means receives information of candidate base station apparatuses selected, on the basis of a service requested by the terminal apparatus, from among other base station apparatuses which are candidates for switching connection from a serving base station apparatus currently connected to the terminal apparatus from the serving base station apparatus;
an acquiring step in which acquiring means acquires identification information of surrounding base station apparatuses from wireless signals transmitted by the surrounding base station apparatuses; and
an executing step in which executing means executes, independent of instruction from the serving base station apparatus, handover to a candidate base station apparatus corresponding to the identification information on the basis of the information of the candidate base station apparatuses, in a case in which the identification information corresponds to identification information of one of the candidate base station apparatuses, the handover being executed in response to quality of a wireless signal from the serving base station dropping below a predetermined level after the information of the candidate base station apparatuses has been received.

14. A method for controlling a base station apparatus capable of connecting to a terminal apparatus, **characterized by** comprising:
an acquiring step in which acquiring means acquires information of a service requested by the terminal apparatus;
a selecting step in which selecting means selects a candidate base station apparatus from among other base station apparatuses which are candidates for switching connection from the base station apparatus of the terminal apparatus on the basis of the information of the service requested by the terminal apparatus; and
a transmitting step in which transmitting means transmits information of the candidate base station apparatus selected to the terminal apparatus, wherein the terminal apparatus executes handover, independent of instruction from the base station apparatus, after the information of the candidate base station apparatus has been received.

15. A program for causing a computer to function as the means provided in the terminal apparatus according to any one of claims 1 to 7 or provided in the base station apparatus according to any one of claims 8 to 12.
